# EUROPÄISCHE PATENTANMELDUNG

(11) **EP 2 025 437 A1**
(43) Veröffentlichungstag der Anmeldung: **18.02.2009**
(21) Anmeldenummer: 08014175.7
(22) Anmeldetag: 08.08.2008
(51) Int. Cl.: B23B 31/02, B23C 5/10

(54) **Werkzeugaufnahmevorrichtung mit Schrumpffutter**

(30) Priorität: 11.08.2007 DE 102007037962
(71) Anmelder: DEPO GmbH & Co. KG, 33428 Marienfeld (DE)
(72) Erfinder: Deitert, Heinz, 33442 Herzebrock-Clarholz (DE)
(74) Vertreter: Elbertzhagen, Otto

(57) **Zusammenfassung**

Das Schrumpffutter (1) der Werkzeugaufnahmevorrichtung weist ein maschinenseitiges Spannelement (2) und daran anschließend einen Schaft (3) mit einer am Aufnahmeende (4) offenen Schrumpfbohrung (5) auf. Der Schaft (3) verjüngt sich vom Spannelement (2) bis zum Aufnahmeende (4) hin. Um bei großen Bearbeitungstiefen kleine Bearbeitungswinkel zu ermöglichen, ist zum Einschrumpfen in die Schrumpfbohrung (5) im Futterschaft (3) ein Adapter (8) vorgesehen, in dem die Schäfte (7) der aufzunehmenden Hartmetallwerkzeuge (6) eingeschrumpft werden und der aus einer hochfesten Stahllegierung besteht.

## Beschreibung

Die Erfindung bezieht sich auf eine Werkzeugaufnahmevorrichtung gemäß den Merkmalen des Oberbegriffs des Patentanspruchs 1.

Solche Werkzeugaufnahmevorrichtungen mit den daran aufgenommenen Werkzeugen dienen vornehmlich der Bearbeitung tiefer Konturen mit steilen Wandungen an Bauteilen aus dem Bereich des Werkzeug- und Formenbaus. Die benutzten Hartmetallwerkzeuge mit den zylindrischen Aufnahmeschäften weisen in der Regel Schneidköpfe auf, deren Durchmesser nicht größer als der Durchmesser der Aufnahmeschäfte der Werkzeuge ist, um die tiefen Konturen bearbeiten zu können. Um tiefere Bearbeitungsstellen an den steilen Werkstückwandungen mit geringer Neigung zur Rotationsachse der Werkzeuge erreichen zu können, kommen Schrumpffutter aus Stahl zum Einsatz, die eine schlanke Bauform haben. Da der Stahl der Schrumpffutter in Relation zu dem Hartmetall der Werkzeuge einen größeren Wärmeausdehnungskoeffizienten hat, können die Werkzeuge nicht nur durch Schrumpfen im Schrumpffutter aufgenommen sondern davon auch wieder mittels Wärmebehandlung entschrumpft werden. Dafür sind entsprechende Dimensionen der Schrumpffutter im Bereich der Schrumpfbohrungen erforderlich.

Daher liegt das Problem der Schrumpffutter in bekannter Ausführung in dem großen Nabendurchmesser am Aufnahmeende der Futterschäfte, der sich in einer die Schrumpfbohrung umgebenden ringförmigen Stirnfläche mit relativ großer Breite am Aufnahmeende des Schaftes der Schrumpfmutter niederschlägt. Der hierdurch bedingte Abstand des Schaftumfanges am Aufnahmeende vom Umfang des Werkzeug-Aufnahmeschaftes ist nachteilig, um kleine Bearbeitungswinkel zu erreichen. Dieser Bearbeitungswinkel ist definiert, durch die Werkzeugrotationsachse einerseits und andererseits durch die Tangentialebene, die zugleich den Schneidenkopf des Werkzeugs an der Zerspanungsstelle und den Umfang des Aufnahmeendes am Schaft des Schrumpffutters tangiert. Der Bearbeitungswinkel wird folglich umso kleiner, je größer der Abstand des Schneidenkopfes am Werkzeug vom Aufnahmeende des Schaftes am Schrumpffutter ist. Zur Erlangung kleiner Bearbeitungswinkel und entsprechend großer Steilheit der Wandung an der Bearbeitungsstelle benutzt man Werkzeuge mit langen Aufnahmeschäften, die im eingeschrumpften Zustand mit entsprechend großer Länge über das Aufnahmeende der Schäfte der Schrumpffutter vorstehen. Dies führt zu Instabilitäten im Fräsprozeß, worunter die Bearbeitungsgenauigkeit leidet.

Der Erfindung liegt die Aufgabe zugrunde, eine Werkzeugaufnahmevorrichtung der eingangs genannten Art zu schaffen, die bei großen Bearbeitungstiefen kleine Bearbeitungswinkel ermöglicht, ohne die Stabilität im Fräsprozeß und damit die Bearbeitungsgenauigkeit zu beeinträchtigen.

Diese Aufgabe wird mit einer die Gesamtheit der Merkmale des Patentanspruchs 1 aufweisenden Werkzeugaufnahmevorrichtung gelöst.

Für die Erfindung ist wesentlich, daß der neue Adapter den Einsatz von Werkzeugen mit kürzeren Aufnahmeschäften ermöglicht, was kostengünstiger ist, weil kürzere Werkzeuge billiger als längere Werkzeuge sind. Da der Adapter aus einer hochfesten Stahllegierung besteht, welche bei kleinerer Dimension des Adapters eine gleich große Schrumpfspannung wie das aus herkömmlichem Stahl gefertigte Schrumpffutter aufbringt, ist ein kleinerer Nabendurchmesser an der vom schaftseitigen Ende abliegenden Stirnseite des Adapters realisierbar. Der in das Schrumpffutter mit seinem Spannschaft eingeschrumpfte Adapter liegt mit seiner ringförmigen Stirnfläche am schaftseitigen Stirnende an der Nabenfläche des Schaftes des Schrumpffutters fest an, was eine steife Anbindung des Adapters an das Schrumpffutter bedingt.

Weiter ist von erheblicher Bedeutung, daß die spezielle Stahllegierung, aus welcher der Adapter gefertigt ist und die bei dem in Relation zur Dimension des Schrumpffutters kleineren Adapter eine gleich große Schrumpfspannung ermöglicht, ein sehr teures Stahlerzeugnis ist. So kommt es aus Kostengründen nicht in Betracht, das gesamte Schrumpffutter aus dieser Stahllegierung herzustellen, dessen Schaft die erforderliche Gesamtlänge aufwiese. So muß zwar eine Fügestelle zwischen dem Schrumpffutter und dem Adapter in Kauf genommen werden, durch eine steife Abstützung des Adapters am Schaft des Schrumpffutters wird dieser Nachteil jedoch kompensiert.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine Werkzeugaufnahmevorrichtung mit Schrumpffutter in einer Arbeitsposition, wobei die dargestellte Werkzeugaufnahmevorrichtung dem Stand der Technik entspricht und
- Fig. 2: in vergleichbarer Darstellung eine Werk zeugaufnahmevorrichtung mit Schrumpffutter in erfindungsgemäßer Ausführung.

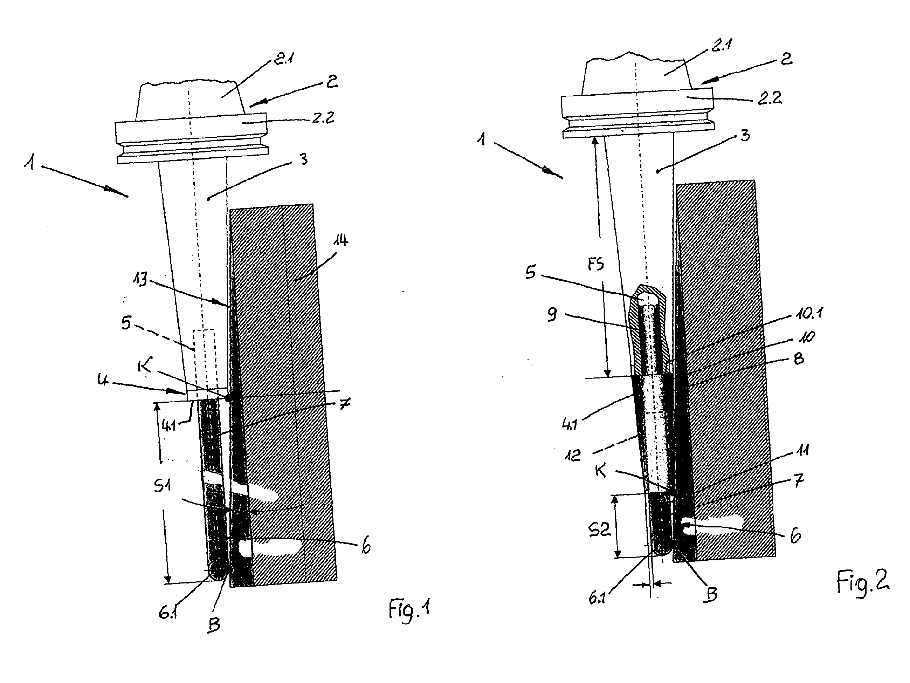

In Fig. 1 erkennt man ein Schrumpffutter 1, welches ein an eine Arbeitsspindel einer Werkzeugmaschine ansetzbares Spannelement 2 aufweist, das aus einem Spannkegel 2.1 und einem Anschlagbund 2.2 besteht. Koaxial schließt an das Spannelement 2 ein Futterschaft 3 an, der bis hin zu seinem vom Anschlagbund 2.2 abliegenden Aufnahmeende 4 eine schlanke Bauform aufweist und sich vom Anschlagbund 2.2 zum Aufnahmeende 4 hin konisch verjüngt. Am Aufnahmeende ist der Futterschaft 3 mit einer ringförmigen Nabenfläche 4.1 versehen, die in Richtung einer Radialebene verläuft. Die Nabenfläche 4.1 umgibt die Mündung einer zylindrischen Schrumpfbohrung 5, die zur Aufnahme eines Hartmetallwerkzeugs 6 dient. Dieses Werkzeug 6 ist mit einem zylindrischen Schaft 7 versehen, der in die Schrumpfbohrung 5 des Futterschaftes 3 eingeschrumpft wird. Das Werkzeug 6 weist einen Schneidenkopf 6.1 mit einem Durchmesser auf, der gleich dem Durchmesser des Werkzeugschaftes 7 ist, so daß man bei dem Werkzeug 6 von einem Fingerfräser sprechen kann.

Weiter ist in Fig. 1 die Wandung 13 eines teilweise wiedergegebenen Werkstücks 14 dargestellt, in deren Fußbereich eine Bearbeitungsstelle B liegt, an der eine Zerspanung vorgenommen wird. Es handelt sich um diejenige Bearbeitungsstelle, die bei maximaler Zustellung des Werkzeugs 6 in Richtung seiner Rotationsachse eine Bearbeitung noch vorgenommen werden kann, ohne an der weiter oben liegenden Stelle K mit dem Umfang des Futterschaftes 3 an seinem Aufnahmeende 4 mit der Wandung 13 zu kollidieren. So ergibt sich an der Wandung 13 ein sogenannter Bearbeitungswinkel α, der die Neigung der Wandung 13 definiert, also deren Steilheit, die umso größer ist, je kleiner der Winkel α ist. Der Bearbeitungswinkel α ist abhängig von der Breite der ringförmigen Nabenfläche 4.1 am Aufnahmeende 4 des Futterschaftes 3, dies entspricht dem Abstand der möglichen Kollisionsstelle K am Umfang des Aufnahmeendes 4 des Futterschaftes 3 und dem benachbarten Scheitel des Umfanges des Aufnahmeschaftes 7 des jeweils gespannten Werkzeuges 6. Um im Schrumpfverfahren einen sicheren Halt des gespannten Werkzeugs 6 im Futterschaft 3 sicherzustellen, kann die Materialstärke um die Schrumpfbohrung 5 herum nicht beliebig verringert und die Breite der ringförmigen Nabenfläche 4.1 nicht beliebig verkleinert werden. Will man bei der in Fig. 1 gegebenen Konstellation den Bearbeitungswinkel α klein halten, bleibt nichts anderes übrig, als Werkzeuge 6 zu verwenden, die mit einem langen Aufnahmeschaft 7 ausgestattet sind. Dies ist in Fig. 1 veranschaulicht. Hieraus ergeben sich die weiter oben dargelegten Nachteile, nämlich die Instabilität im Fräsprozeß, die auf die erhebliche Länge der Aufnahmeschäfte 7 der in diesem Fall zu verwendenden Werkzeuge 6 zurückzuführen ist.

In Fig. 2 sind für gleiche Bauteile, wie sie auch bei der Vorrichtung nach Fig. 1 vorhanden sind, gleiche Bezugszeichen verwendet. Auch ist die dargestellte Frässituation in Fig. 2 die gleiche wie in Fig. 1. Die Besonderheit der Aufnahmevorrichtung nach Fig. 2 liegt in der Verwendung eines Adapters 8, der es ermöglicht, bei kleinem Bearbeitungswinkel mit einem einen kurzen Aufnahmeschaft 7 aufweisenden Werkzeug 6 auszukommen. Der Adapter 8 weist an seinem zum Futterschaft 3 hin liegenden Ende einen zylindrischen Spannschaft 9 auf, der gegenüber dem weiteren Bereich des Adapters 8 im Durchmesser abgesetzt ist. Dadurch ist am schaftseitigen Ende 10 des Adapters 8 um den Spannschaft 9 herum eine Ringfläche 10.1 gebildet, die in einer Radialebene liegt. In der Funktions- oder Betriebslage ist der Adapter 8 mit seinem Spannschaft 9 in die Schrumpfbohrung 5 des Futterschaftes 3 eingeschrumpft und liegt mit seiner endseitigen Ringfläche 10.1 an der ebenfalls ringförmigen Nabenfläche 4.1 des Futterschaftes 3 lückenlos an. Des weiteren ist der Durchmesser am schaftseitigen Ende 10 des Adapters 8 der gleiche wie der des Aufnahmeendes 4 am Futterschaft 3, weswegen der Adapter 8 mit seinem schaftseitigen Ende 10 bündig an das Aufnahmeende 4 des Futterschaftes 3 anschließt. Des weiteren ist der Adapter 8 in gleicher Weise konisch wie der Futterschaft 3 ausgebildet und verjüngt sich zu seiner vom schaftseitigen Ende 10 abliegenden Stirnseite 11 hin. Der Spannschaft 9 des Adapters 8 ist an die Aufnahme in der Schrumpfbohrung 5 des Futterschaftes 3 angepaßt.

Analog zur Ausbildung der Schrumpfbohrung 5 des Futterschaftes 3 ist der Adapter 8 mit einer koaxialen Bohrung 12 versehen, in welche die kürzeren Aufnahmeschäfte 7 der zu verwendenden Werkzeuge 6 eingeschrumpft werden. Aufgrund der Konizität des Adapters 8 ist dessen wiederum ringförmige, die Mündung der Bohrung 12 umgebende Stirnseite 11 in Radialrichtung wesentlich schmaler als die ringförmige Nabenfläche 4.1 am Aufnahmeende 4 des Futterschaftes 3. Folglich liegt bei der Werkstückbearbeitung die Kollisionsstelle K wesentlich tiefer und somit näher zur Bearbeitungs- oder Zerspanungsstelle B, als es beim Stand der Technik gemäß dem hierzu gezeigten Beispiel von Fig. 1 der Fall ist.

Insgesamt erreicht man mit dem Adapter 8, daß bei gleicher Länge FS des Futterschaftes 3 anstelle der Werkzeuge 6 mit einem Aufnahmeschaft 7 der Länge S1 (Fig. 1) Werkzeuge 6 mit einem Aufnahmeschaft 7 der kürzen Länge S2 verwendet werden können, um eine Bearbeitung unter gleichem Bearbeitungswinkel α an der entsprechend steilen Werkstückwandung 13 in gleicher Tiefe vornehmen zu können.

Um eine ausreichende Spannsicherheit zu gewährleisten, ist der Adapter 8 aus einer hochfesten Stahllegierung gefertigt, welche die dünne Wandstärke des Adapters 8 insbesondere im Bereich der Bohrung 12 zur Werkzeugaufnahme ermöglicht. Die Schrumpfeigenschaften dieser Stahllegierung sind dennoch im wesentlichen die gleichen wie die des für den Futterschaft 3 verwendeten Stahls.

## Patentansprüche

1. Werkzeugaufnahmevorrichtung für rotierende Hartmetallwerkzeuge, wie Fräser, mit einem aus Stahl bestehenden Schrumpffutter (1), welches koaxial anschließend an ein maschinenseitiges Spannelement (2) einen Schaft (3) mit einer am Aufnahmeende (4) offenen, koaxialen Schrumpfbohrung (5) aufweist, wobei der Schaft (3) sich vom Spannelement (2) bis an sein Aufnahmeende (4) heran verjüngt und an dem Aufnahmeende (4) eine ringförmige, in einer Radialebene liegende Nabenfläche (4.1) hat und wobei die Werkzeuge (6) zylindrische Schäfte (7) mit im Durchmesser gleichen Schneidköpfen (6.1) aufweisen,
**dadurch gekennzeichnet,**
**daß** zum Einschrumpfen in die Schrumpfbohrung (5) im Futterschaft (3) ein Adapter (8) mit einem im Durchmesser abgesetzten Spannschaft (9) vorgesehen ist, der in der Betriebslage mit seiner den Spannschaft (9) umgebenden Ringfläche (10.1) an der ringförmigen Nabenfläche (4.1) am Aufnahmeende (4) des Futterschaftes (3) anliegt und an das Aufnahmeende (4) des Futterschaftes (3) bündig anschließt und der eine für die koaxiale Aufnahme der Schäfte (7) der Werkzeuge (6) schrumpfbare sowie an seiner vom Spannschaft (9) abliegenden Stirnseite (11) offene Bohrung (12) aufweist, wobei der Adapter (8) sich von seinem schaftseitigen Stirnende (10) bis zu seiner werkzeugseitigen Stirnseite (11) verjüngt und aus einer in Relation zum Stahl des Schrumpffutters (1) hochfesten Stahllegierung besteht, deren Wärmedehnungskoeffizient doppelt so groß wie der des Stahls des Schrumpffutters (1) ist.

2. Werkzeugaufnahmevorrichtung nach Anspruch 1,
**dadurch gekennzeichnet,**
**daß** der Schaft (3) des Schrumpffutters (1) und der Adapter (8) sich stetig verjüngen.

3. Werkzeugaufnahme nach Anspruch 2,
**dadurch gekennzeichnet,**
**daß** sowohl der Schaft (3) als auch der Adapter (8) außenseitig konisch ausgebildet sind.

4. Werkzeugaufnahmevorrichtung nach Anspruch 1 - 3,
**dadurch gekennzeichnet,**
**daß** die Schrumpfbohrung (5) des Schaftes (3) am Schrumpffutter (1 ) und die schrumpfbare Bohrung (12) des Adapters (8) gleiche Durchmesser haben.
